# EUROPÄISCHE PATENTSCHRIFT

(11) **EP 3 124 414 B1**
(45) Veröffentlichungstag und Bekanntmachung des Hinweises auf die Patenterteilung: **12.09.2018**
(21) Anmeldenummer: 15178665.4
(22) Anmeldetag: 28.07.2015
(51) Int. Cl.: B65H 75/14, B65H 75/40, B65H 75/44, H02G 11/02

(54) **LEITUNGSROLLER**
CABLE REEL
ENROULEUR DE CABLES

(43) Veröffentlichungstag der Anmeldung: 01.02.2017
(73) Patentinhaber: Hugo Brennenstuhl GmbH & Co. KG, 72074 Tübingen (DE)
(72) Erfinder: Brennenstuhl, Hugo, 72074 Tübingen (DE)
(74) Vertreter: Patentanwälte Magenbauer & Kollegen Partnerschaft mbB

(56) Entgegenhaltungen:
- DE-A1- 2 319 326
- DE-A1- 2 739 979
- DE-A1-102013 104 766
- DE-U1-202008 009 207

## Beschreibung

Die Erfindung betrifft einen Leitungsroller, insbesondere Kabeltrommel, mit wenigstens einem Trommelkörper zum Aufwickeln einer elektrischen Leitung, der wenigstens eine aus elektrisch leitfähigem Material ausgebildete Trommelscheibe mit einer Innenseite und einer Außenseite aufweist, wobei die Trommelscheibe eine Isolierung aus elektrisch nicht leitfähigem Material aufweist, wobei die Isolierung eine der Innenseite vorgelagerte innere Isolierscheibe umfasst. Leitungsroller, die umgangssprachlich oftmals als Kabeltrommeln bezeichnet werden, sind in den verschiedensten Ausführungsvarianten seit langem bekannt. Es sind beispielsweise Leitungsroller bekannt, bei denen der Trommelkörper komplett aus Kunststoff besteht. Eine Isolierung des Trommelkörpers ist bei diesen Ausführungen nicht notwendig, da das Kunststoffmaterial elektrisch nicht leitfähig ist.
Ferner sind Leitungsroller bekannt, bei denen der Trommelkörper zumindest teilweise aus elektrisch leitfähigem Material besteht, beispielsweise sogenannte Metall-Kabeltrommeln. Solche Leitungsroller mit Bestandteilen aus elektrisch leitfähigem Material müssen gemäß den berufsgenossenschaftlichen Informationen BGI/GUV-I 608 der BG Bau vom Mai 2012 "Auswahl und Betrieb elektrischer Anlagen und Betriebsmittel auf Bau- und Montagestellen" Abschnitt 5.1.2 mit Isolierstoff umhüllt sein. Insbesondere offenbart diese BG-Information, dass Tragegriff, Kurbelgriff und Trommel aus Isolierstoff bestehen oder mit Isolierstoff umhüllt sein müssen.

Aus der DE 10 2013 104 766 A1 ist ein Leitungsroller der eingangs genannten Art bekannt, bei dem der Innenseite der Trommelscheibe eine Isolierscheibe zugeordnet ist, die einen äußeren Randabschnitt besitzt, der als Falzabschnitt ausgebildet ist und den Rand der Trommelscheibe umgreift, sodass die Isolierscheibe dort formschlüssig gehalten ist. Bei diesem Leitungsroller ist somit die Innenseite der Trommelscheibe und der umlaufende Rand mit elektrisch nicht leitfähigem Material isoliert. Die Außenseite der Trommelscheibe hingegen ist nicht isoliert.

Die DE 27 39 979 offenbart eine Kabeltrommel mit einem Zylinderteil zwischen zwei Deckelscheiben und mit einer Mehrfachsteckdose, die einen Sockel und einen Deckel aus Isolierstoff aufweist, wobei der Sockel an einem Halteteil am einen Ende des Zylinderteils festgelegt ist und der Deckel über eine Öffnung in der einen Deckelscheibe von außen zugänglich ist.

Die DE 20 2008 009 207 U1 offenbart eine Kabeltrommel mit einem rotierbar gelagerten Trommelkörper, einem auf einer Mantelfläche des Trommelkörpers aufwickelbaren Stromkabel und mit mindestens einer an einer ersten Außenseite der Kabeltrommel angeordneten Steckdose, wobei an einer der ersten Außenseite gegenüberliegenden zweiten Außenseite der Kabeltrommel eine elektrisch mit dem Stromkabel verbundene Lichtquelle vorgesehen ist, die zweckmäßigerweise in einer Vertiefung in der zweiten Außenseite angeordnet und von einer transparenten Scheibe bedeckt ist.
Aufgabe der Erfindung ist es daher, einen Leitungsroller der eingangs erwähnten Art zu schaffen, bei dem größere Bereiche der aus elektrisch leitfähigem Material bestehenden wenigstens einen Trommelscheibe gegenüber dem vorstehend erwähnten Stand der Technik mit elektrisch nicht leitfähigem Material isoliert sind.
Diese Aufgabe wird durch einen Leitungsroller mit den Merkmalen des unabhängigen Anspruchs 1 gelöst. Weiterbildungen der Erfindung sind in den Unteransprüchen dargestellt.
Der erfindungsgemäße Leitungsroller zeichnet sich dadurch aus, dass die Isolierung eine der Außenseite vorgelagerte äußere Isolierscheibe umfasst, wobei innere und äußere Isolierscheibe mittels Befestigungsmitteln aus elektrisch nicht leitfähigem Material aneinander befestigt sind, in der Art dass auch ein äußerer Rand der Trommelscheibe isoliert ist.
Im Gegensatz zu dem vorerwähnten Stand der Technik ist hier also auch die Außenseite der aus elektrisch leitfähigem Material bestehenden Trommelscheibe isoliert. In der Regel bestehen Leitungsroller aus zwei einander gegenüberliegenden Trommelscheiben, die jeweils an einen Trommelkern des Trommelkörpers angesetzt sind. Die Trommelscheiben begrenzen einen Wickelraum zum Aufwickeln einer elektrischen Leitung, insbesondere eines elektrischen Kabels. Im Falle eines Leitungsrollers mit zwei Trommelscheiben werden also an beiden jeweils aus elektrisch leitfähigem Material bestehen Trommelscheiben, Isolierscheiben sowohl an der Innenseite als auch an der Außenseite der Trommelscheiben angebracht. Die der wenigstens eine Trommelscheibe zugeordneten Isolierscheiben sind derart angeordnet, dass auch der äußere Rand der Trommelscheibe mit isoliert ist. Mit einer derartigen Ausgestaltung sind die vorerwähnten Anforderungen der BGI/GUV-I 608 erfüllt.

Die Isolierscheiben können einteilig oder aus mehreren Scheibenteilen zusammengesetzt sein. Bevorzugt handelt es sich bei dem elektrisch nicht leitfähigen Material der Isolierscheiben um Kunststoffmaterial. Es sind jedoch auch andere elektrisch nicht leitfähige Materialien einsetzbar.

In besonders bevorzugter Weise weist die äußere Isolierscheibe transparente Scheibenabschnitte auf oder ist über ihre gesamte Scheibenfläche transparent. Dies hat den Vorteil, dass die Sichtseite der Trommelscheibe, also die Außenseite, trotz Isolierung mit elektrisch nicht leitfähigem Material als aus elektrisch leitfähigem Material bestehend wahrgenommen wird. Bei dem elektrisch leitfähigen Material der Trommelscheibe handelt es sich vorzugsweise um ein Metallmaterial, insbesondere Stahlmaterial, beispielsweise Stahlblech. Mit einer transparenten äußeren Isolierscheibe ist also gewährleistet, dass ein Metall-Leitungsroller, insbesondere Metall-Kabeltrommel, auch als solche wahrgenommen wird.

Denkbar wäre es jedoch auch, dass die äußere Isolierscheibe aus nicht transparentem Material besteht, wenn es hauptsächlich auf die Robustheit von aus elektrisch leitfähigem Material bestehenden Trommelscheiben ankommt und der "Metallcharakter" eher untergeordnet ist.

Bei einer Weiterbildung der Erfindung weisen die Isolierscheiben jeweils einen Isolierscheibendurchmesser auf, der jeweils größer ist als ein Trommelscheibendurchmesser der Trommelscheibe. Besonders bevorzugt ragen also die äußeren Ränder der Isolierscheiben über den äußeren Rand der Trommelscheibe hinaus. Die beiden Isolierscheiben sind mittels Befestigungsmitteln aus elektrisch nicht leitfähigem Material aneinander befestigt, derart, dass auch ein äußerer Rand der Trommelscheibe isoliert ist. Die beiden Isolierscheiben sind also in bevorzugter Weise nicht an der Trommelscheibe befestigt, sondern nehmen die Trommelscheibe zwischen sich auf und sind aneinander befestigt.
Es wäre auch möglich, innere und äußere Isolierscheibe aneinander zu befestigen und zusätzlich innere und/oder äußere Isolierscheibe an der zugeordneten Trommelscheibe zu befestigen. Zweckmäßigerweise sind die Befestigungsmittel Bestandteile der Isolierscheiben. Es ist jedoch alternativ möglich, dass die Befestigungsmittel von den Isolierscheiben separat ausgebildet sind, beispielsweise in Form eines Befestigungsrings nach Art eines Kantenschoners.
In besonders bevorzugter Weise sind die Befestigungsmittel zur werkzeuglosen Befestigung der Isolierscheiben aneinander eingerichtet. Dies erlaubt eine schnelle und wenige Bauteile umfassende Befestigung der beiden Isolierscheiben aneinander.

Bei einer Weiterbildung der Erfindung sind die Befestigungsmittel radial außerhalb der Trommelscheibe angeordnet. Besonders bevorzugt ist die Befestigung der Isolierscheiben aneinander ohne formschlüssigen Halt der Isolierscheiben an der Trommelscheibe ausgebildet. In diesem Fall bleibt also die Trommelscheibe frei von Befestigungsaufgaben und ist lediglich zwischen den beiden Isolierscheiben angeordnet, ohne als Lager für diese zu dienen.

In besonders bevorzugter Weise weisen die Befestigungsmittel wenigstens ein an der inneren Isolierscheibe angeordnetes inneres Befestigungselement und wenigstens ein an der äußeren Trommelscheibe angeordnetes äußeres Befestigungselement auf, die aneinander befestigt sind. Die Befestigungsmittel werden also zweckmäßigerweise gemeinsam von dem inneren Befestigungselement an der inneren Isolierscheibe und dem äußeren Befestigungselement an der äußeren Isolierscheibe gebildet.

Besonders bevorzugt sind innere und äußere Befestigungselemente jeweils einstückig an der zugeordneten Isolierscheibe angeordnet, insbesondere an der zugeordneten Isolierscheibe angeformt.

Zweckmäßigerweise bestehen die Isolierscheiben aus Kunststoffmaterial. Die zugeordneten Befestigungselemente können dann bei der Herstellung der Isolierscheiben gleich mit angeformt werden.

Bei einer Weiterbildung der Erfindung ist der Isolierscheibendurchmesser der inneren Isolierscheibe größer als der innere Isolierscheibendurchmesser der äußeren Isolierscheibe, wobei das innere Befestigungselement das äußere Befestigungselement umgreift und dort am äußeren Befestigungselement formschlüssig gehalten ist. Alternativ wäre es auch denkbar, dass der Isolierscheibendurchmesser der äußeren Scheibe größer ist als derjenige der inneren Isolierscheibe und in diesem Fall das äußere Befestigungselement das innere Befestigungselement umgreift und dort am inneren Befestigungselement gehalten ist.

Bei einer Weiterbildung der Erfindung ist das äußere Befestigungselement als insbesondere ununterbrochen umlaufender Befestigungswulst ausgebildet, der vorzugsweise einen äußeren Randabschnitt der äußeren Isolierscheibe bildet. Zweckmäßigerweise ist der äußere Befestigungswulst dem äußeren Rand der Trommelscheibe radial vorgelagert. Es ist auch möglich, dass der Befestigungswulst unterbrochen umlaufend ausgebildet ist, beispielsweise aus mehreren Segmenten besteht, wobei zwischen jeweils benachbarten Segmenten eine Lücke ausgebildet ist. Denkbar wäre auch ein unterbrochen umlaufender Befestigungswulst mit mehreren Segmenten, wobei jeweils benachbarte Segmente einander überlappend ausgebildet sind.

In besonders bevorzugter Weise ist das innere Befestigungselement als insbesondere ununterbrochen umlaufender im Querschnitt U-förmig ausgebildeter Halterandabschnitt ausgebildet. Der Halterandabschnitt kann somit eine umlaufende Nut bilden, in die der Befestigungswulst an der äußeren Isolierscheibe aufgenommen ist. Es ist auch möglich, dass der Halterandabschnitt unterbrochen umlaufend ausgebildet ist, beispielsweise aus mehreren Segmenten besteht, wobei zwischen jeweils benachbarten Segmenten eine Lücke ausgebildet ist. Denkbar wäre auch ein unterbrochen umlaufender Halterandabschnitt mit mehreren Segmenten, wobei jeweils benachbarte Segmente einander überlappend ausgebildet sind.

Bei einer Weiterbildung der Erfindung weist die innere Isolierscheibe mehrere, insbesondere zwei zur Isolierscheibe zusammengefügte Scheibenteile auf.

In besonders bevorzugter Weise sind die Scheibenteile von Halbscheiben gebildet, die diesseits und jenseits der zugeordneten Trommelscheibe angesetzt und zur Isolierscheibe zusammengesetzt sind, wobei der U-förmige Halterandabschnitt den Befestigungswulst an der äußeren Isolierscheibe übergreift. Es ist also möglich, die äußere Isolierscheibe zu sichern, indem die beiden Halbscheiben aufgesteckt werden und dabei der Halterandabschnitt an der einen Halbscheibe und der Halterandabschnitt an der anderen Halbscheibe gemeinsam den Befestigungswulst übergreifen, wobei die beiden Halbscheiben gleichzeitig zusammengefügt werden.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung eines bevorzugten Ausführungsbeispiels des erfindungsgemäßen Leitungsrollers,
- Figur 2: eine Vorderansicht auf den Leitungsroller von Figur 1,
- Figur 3: eine Stirnansicht auf den Leitungsroller von Figur 1,
- Figur 4: einen Schnitt durch den Leitungsroller entlang der Linie IV-IV in Figur 2,
- Figur 5: eine Explosionsdarstellung der beiden Isolierscheiben und der zugeordneten vorderen Trommelscheibe,
- Figur 6: eine Vorderansicht auf die vordere Trommelscheibe mit daran befestigten Isolierscheiben,
- Figur 7: ein Schnitt durch die Trommelscheibe und die Isolierscheiben entlang der Linie VII-VII in Figur 6 und
- Figur 8: eine vergrößerte Darstellung der Einzelheit X aus Figur 7.

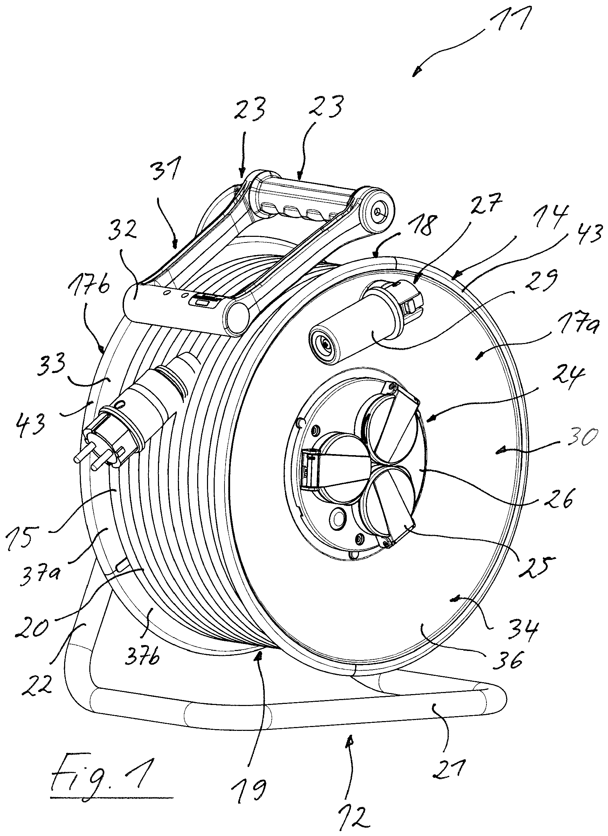

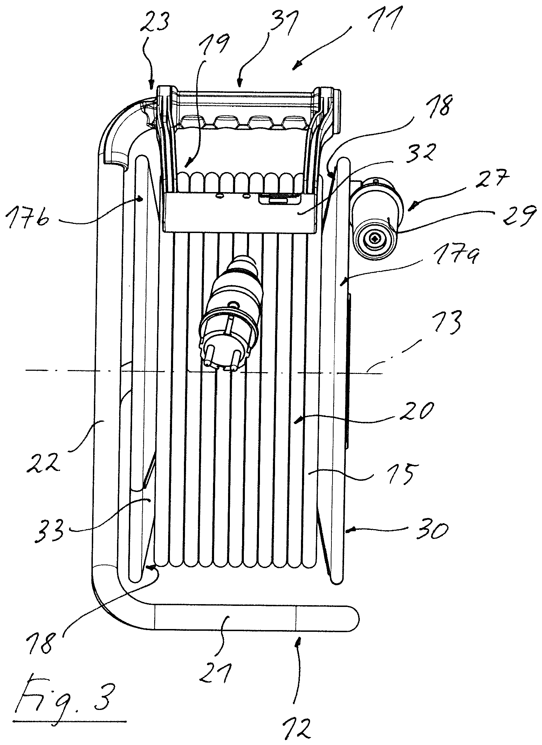

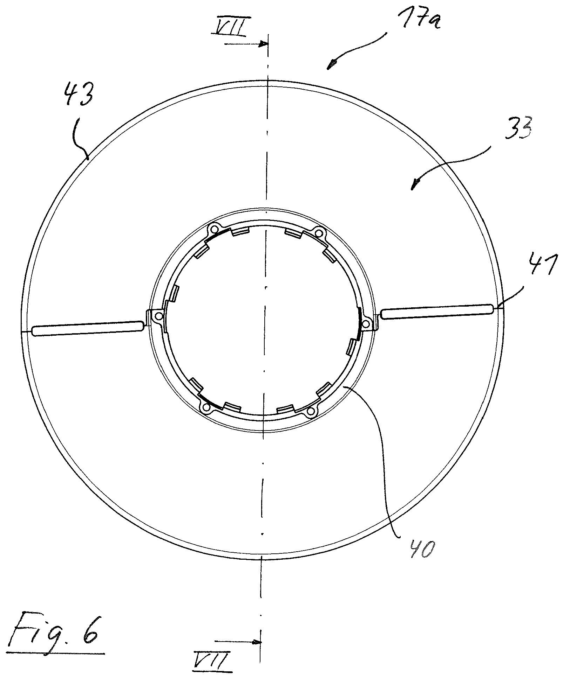

Die Figuren 1 bis 8 zeigen ein bevorzugtes Ausführungsbeispiel des erfindungsgemäßen tragbaren Leitungsrollers 11, der im Folgenden beispielhaft in Form einer Kabeltrommel gezeigt und beschrieben ist.

Die Kabeltrommel besitzt einen an einem Standgestell 12 um eine Trommelachse 13 drehbar gelagerten Trommelkörper 14, der seinerseits aus einer eine elektrische Leitung in Form eines Kabels 15 aufnehmenden Trommelkern 16 bzw. Wickelwelle und eine den Trommelkern 16 zu beiden Enden abschließenden Trommelscheiben 17a, 17b mit gegenüber dem Trommelkern 16 deutlich größerem Durchmesser besteht. Die beiden Trommelscheiben 17a, 17b bestehen aus elektrisch leitfähigem Material, beispielsweise Metallmaterial, insbesondere Stahlmaterial. Der Trommelkern 16 besteht aus Kunststoffmaterial.

Die einander gegenüberliegenden Innenseiten 18 der beiden Trommelscheiben 17a, 17b begrenzen einen Wickelraum 19 zum Aufwickeln des Kabels 15. Dabei wird das Kabel 15 beim Aufwickeln an die Mantelfläche des Trommelkerns 16 in Anlage gebracht, bis diese vollständig mit dem Kabel 15 bedeckt ist, wobei dann anschließend eine zweite Kabellage über die auf dem Trommelkern 16 befindliche erste Kabellage aufgewickelt wird. Insgesamt entsteht dadurch beim Aufwickeln ein Kabelwickel 20, dessen Wickeldurchmesser beim Aufwickeln zunimmt und entsprechend beim Abwickeln abnimmt.

Das Standgestell 12 besteht aus einem Standabschnitt 21 oder Fuß, über den die Kabeltrommel standsicher auf dem Untergrund abgestellt werden kann. An den Standabschnitt 21 schließt sich, insbesondere einstückig mit diesem verbunden, ein Vertikalabschnitt 22 an, der oberhalb der Trommelscheiben 17a, 17b in einen sich im Wesentlichen parallel zur Trommelachse 13 erstreckenden Handgriffabschnitt 23 insbesondere einstückig übergeht.

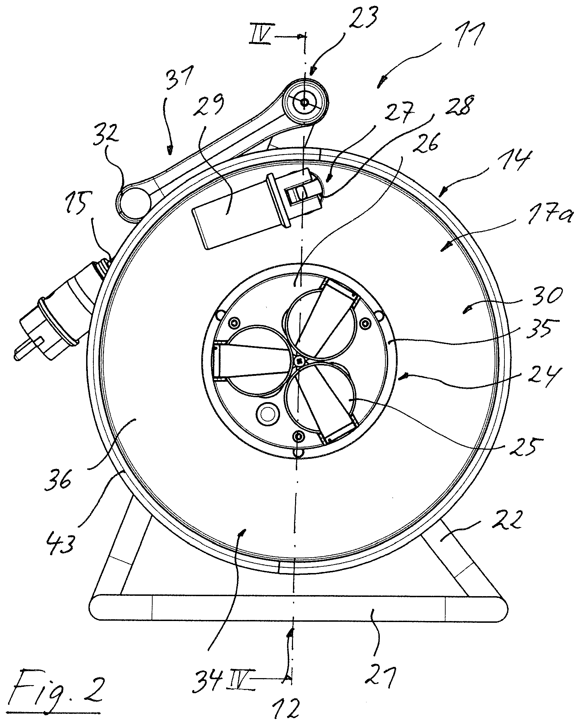

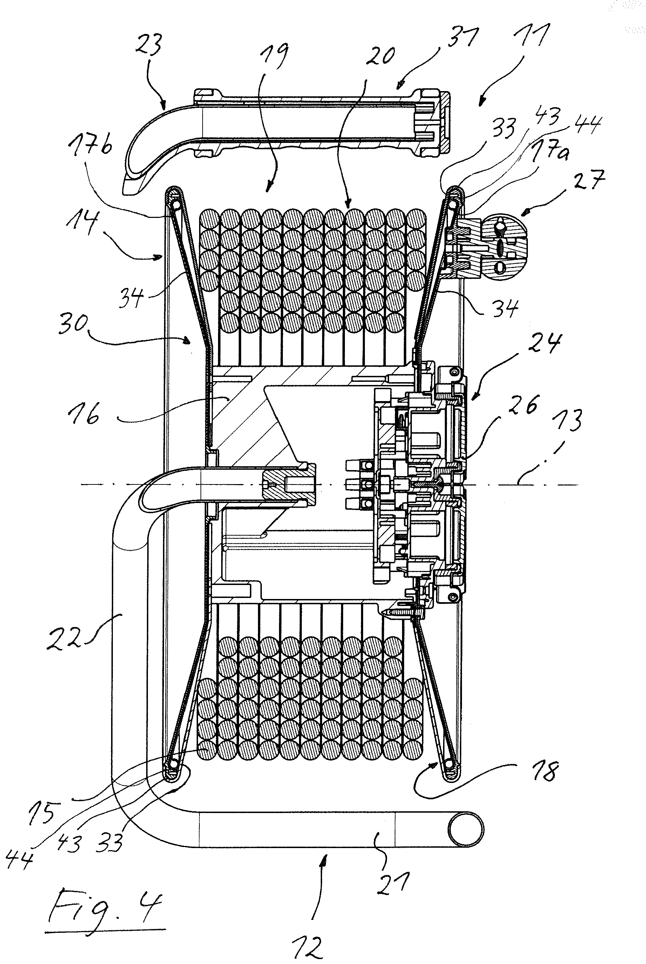

Wie insbesondere in den Figuren 1 und 2 dargestellt, befindet sich an der vorderen der beiden Trommelscheiben 17a, 17b ein Steckdosenbereich 24 mit einer bestimmten Anzahl von Steckdosen 25, beispielsweise drei oder vier an der Zahl. Im gezeigten Beispielsfall sind drei Steckdosen 25 vorgesehen. Die Steckdosen 25 befinden sich an einer Steckdosenplatte 26, die, wie insbesondere in Figur 4 gezeigt, an der Stirnseite des Trommelkerns 16 befestigt, insbesondere dort angeschraubt ist.

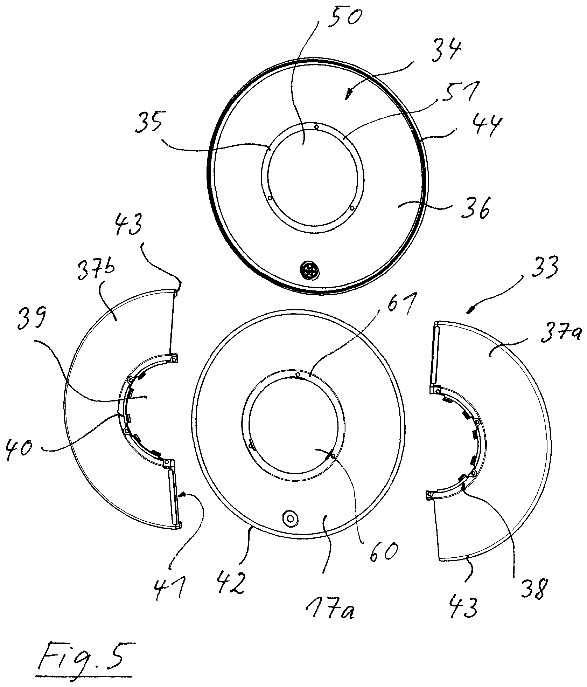

Die Steckdosenplatte 26 wird hierzu an das Zentrum der vorderen Trommelscheibe angesetzt, die, wie insbesondere in Figur 5 gezeigt, Montagelöcher besitzt, über die geeignete Befestigungsmittel, beispielsweise Befestigungsschrauben in die Stirnseite des Trommelkerns 16 eingeschraubt werden können.

An der vorderen Trommelscheibe 17a befindet sich ein Drehgriff 27, über den der Trommelkörper 14 zum Zwecke des Auf- bzw. Abwickelns des Kabels 15 in Drehbewegung versetzbar ist.

Es ist hier in beispielhafter Weise ein klappbarer Drehgriff 27 vorgesehen, der einen Basisabschnitt 28 und einen über ein Gelenk mit dem Basisabschnitt 28 verbundenen Handhabungsabschnitt 29 aufweist. Wie insbesondere in Figur 2 gezeigt, lässt sich der Handhabungsabschnitt 29 in eine Gebrauchsposition ausklappen, in dem er als Verlängerung des Basisabschnitts 28 ausgerichtet ist und für eine Drehbewegung des Trommelkörpers 14 zur Verfügung steht. Durch Abklappen lässt sich der Handhabungsabschnitt 29 in eine Nichtgebrauchslage verbringen, in der er längs einer Außenseite 30 der zugeordneten vorderen Trommelscheibe 17a ausgerichtet ist. Selbstverständlich ist es auch möglich, andere Drehgriff-Arten einzusetzen, beispielsweise einen starren Drehgriff.

Dem Handgriffabschnitt 23 ist eine Führungseinrichtung 31 zur Führung des Kabels 15 zugeordnet, wobei die Führungseinrichtung 31 wenigstens ein Führungselement 32 aufweist, dass das Kabel 15 beim Aufwickelvorgang untergreift und bei einer Bewegung in Achsrichtung der Trommelachse 13 führt. Die Führungseinrichtung 31 umfasst Schwenklagermittel, mit denen das Führungselement 32 am Handgriffabschnitt 23 schwenkbar gelagert ist.

Die wenigstens eine Trommelscheibe, im Beispielsfall beide Trommelscheiben 17a, 17b weisen eine Isolierung aus elektrisch nicht leitfähigem Material auf.

Die Isolierung umfasst eine der Innenseite 18 der zugeordneten Trommelscheibe 17a, 17b vorgelagerte innere Isolierscheibe 33 und eine der Außenseite der zugeordneten Trommelscheibe 17a, 17b vorgelagerte äußere Isolierscheibe 34.

Wie insbesondere in den Figuren 2 und 4 gezeigt, ist der vorderen Trommelscheibe 17a an ihre Außenseite 30 die äußere Isolierscheibe 34 zugeordnet. Die äußere Isolierscheibe 34 besteht aus elektrisch nicht leitfähigem Material, beispielsweise Kunststoffmaterial.

Die äußere Isolierscheibe 34 besitzt, wie insbesondere in Figur 5 dargestellt, einen Mittelabschnitt 35, mit einem zentralen Loch 50 zur Durchführung des Steckdosenbereichs 24 und einen das Loch umrandenden Flanschabschnitt 51 mit Montagelöchern. An den Mittelabschnitt 35 der äußeren Isolierscheibe 34 schließt sich ein ringförmiger schräg zum Mittelabschnitt 35 verlaufender Außenabschnitt 36 an, der einem ebenfalls schräg zu dem Zentralabschnitt der vorderen Trommelscheibe 17a verlaufenden schrägen Abschnitt vorgelagert ist

Die vordere Trommelscheibe 17a besitzt entsprechend zur äußeren Isolierscheibe 34 ebenfalls eine kreisrunde Durchbrechung 60, die von einem ringförmigen Montageabschnitt 61 mit Montagelöchern umrandet ist.

Zumindest der Außenabschnitt 36 der äußeren Isolierscheibe 34, insbesondere die gesamte äußere Isolierscheibe 34 besteht aus einem transparenten Material, wodurch die metallene vordere Trommelscheibe 17a zu sehen ist und damit die Kabeltrommel für den Verbraucher als Metall-Kabeltrommel erkennbar ist.

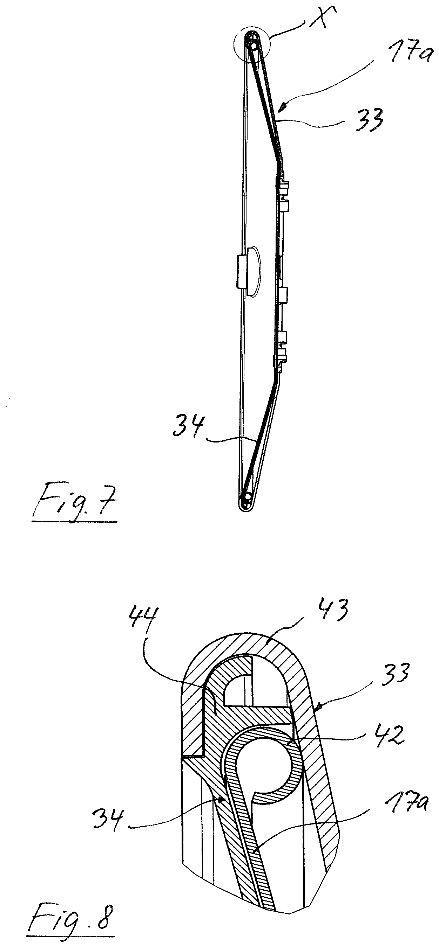

Wie insbesondere in Figur 4 und auch in Figur 8 gezeigt, ist der Isolierscheibendurchmesser der äußeren Isolierscheibe 34 größer als ein Trommelscheibendurchmesser der Trommelscheiben 17a, 17b.

Die innere Isolierscheibe 33 besitzt ebenfalls einen Isolierscheibendurchmesser, der größer ist als der Trommelscheibendurchmesser der Trommelscheiben 17a, 17b. Die innere Isolierscheibe 33 besteht ebenfalls aus elektrisch nicht leitfähigem Material, beispielsweise Kunststoffmaterial. Im Gegensatz zur äußeren Isolierscheibe 34 besteht hier nicht der Bedarf, dass das Material transparent ist.

Wie insbesondere in Figur 5 gezeigt, besteht die innere Isolierscheibe 33 aus mehreren Scheibenteilen, die zur inneren Isolierscheibe 33 zusammengesetzt sind. Wie beispielhaft gezeigt, sind die Scheibenteile als Halbscheiben 37a, 37b ausgebildet und können zu einer Vollscheibe zusammengesetzt werden. Die beiden Halbscheiben 37a, 37b besitzen jeweils einen zentralen Abschnitt 38 mit einer halbkreisförmigen Durchbrechung 39, die von einem ringförmigen Flanschbereich 40 begrenzt ist. Wie insbesondere in Figur 5 gezeigt, steht der Flanschbereich der einen Halbscheibe 37a ein Stück weit über einen Fügerand 41 der Halbscheibe 37a hinaus. Gleiches gilt für die andere Halbscheibe 37b, auch hier steht der Flanschbereich 40 ein Stück weit über den Fügerand 41 hinaus, jedoch im Gegensatz zur anderen Halbscheibe 37a, hier der obere Bereich des Flanschbereichs 40. Die beiden überstehenden Abschnitte der Flanschbereiche 40 überlappen den jeweils anderen Flanschbereich 40 der jeweils anderen Halbscheibe 37a, 37b In den Flanschbereichen 40 der beiden Halbscheiben 37a, 37b befinden sich Befestigungslöcher. In den beiden sich überlappenden Abschnitten der Flanschbereiche 40 fluchten jeweils Befestigungslöcher der einen Halbscheibe 37a mit Befestigungslöchern der anderen Halbscheibe 37b.

Die beiden Halbscheiben 37a, 37b lassen sich links und rechts bzw. diesseits und jenseits der zugeordneten Trommelscheibe, beispielsweise der vorderen Trommelscheibe 17a, ansetzen.

Die beiden Isolierscheiben 33, 34 sind mittels Befestigungsmitteln aus elektrisch nicht leitfähigem Material aneinander befestigt, insbesondere derart, dass auch ein äußerer Rand 42 der Trommelscheibe 17a, 17b isoliert ist.

Wie insbesondere in den Figuren 4 und 8 gezeigt, sind die Befestigungsmittel Bestandteile der Isolierscheiben 33, 34 und werden bei der Herstellung der Isolierscheiben 33, 34 gleich mit angeformt.

Die Befestigungsmittel umfassen ein an der inneren Isolierscheibe 33 angeordnetes inneres Befestigungselement in Form eines ununterbrochen umlaufenden im Querschnitt U-förmig ausgebildeten Halterandabschnitts 43. Das Gegenstück hierzu ist ein an der äußeren Isolierscheibe 34 angeordnetes äußeres Befestigungselement in Form eines ununterbrochen umlaufenden Befestigungswulsts 44. Halterandabschnitt 43 und Befestigungswulst 44 sind einander zugewandt.

Wie insbesondere in Figur 8 gezeigt, ist der Isolierscheibendurchmesser der inneren Isolierscheibe 33 größer als der Isolierscheibendurchmesser der äußeren Isolierscheibe 34. Der Befestigungswulst 44 an der äußeren Isolierscheibe 34 ist dem äußeren Rand der Trommelscheibe 17a, 17b radial vorgelagert. Der Befestigungswulst erstreckt sich also über den äußeren Rand 42 der Trommelscheibe 17a, 17b hinaus und überragt diesen, ohne dass er formschlüssig an der zugeordneten Trommelscheibe 17a, 17b gehalten ist. Ohne das Gegenlager der inneren Isolierscheibe 33 würde die äußere Isolierscheibe 34 nicht an der zugeordneten Trommelscheibe 17a, 17b halten.

Wie insbesondere in Figur 8 dargestellt, umgreift der Halterandabschnitt 43 an der inneren Isolierscheibe 33 den Befestigungswulst 44 an der äußeren Isolierscheibe 34 und ist dort an dem Befestigungswulst 44 formschlüssig gehalten.

Zur Montage der Isolierscheiben 33, 34 an der vorderen Trommelscheibe 17a wird zunächst die vordere Trommelscheibe 17a mit der Außenseite 30 nach oben auf der Innenseite 18 abgelegt. Danach wird die äußere Isolierscheibe 34 an die Außenseite 30 der vorderen Trommelscheibe 17a angesetzt. Als nächstes werden die beiden Halbscheiben 37a, 37b der inneren Isolierscheibe 33 links und rechts der vorderen Trommelscheibe 17a an diese herangeführt und seitlich auf die vordere Trommelscheibe 17a aufgesteckt, wobei die Halterandabschnitte 43 an den beiden Halbscheiben 37a, 37b den Befestigungswulst 44 umgreifen, wodurch die äußere Isolierscheibe 34 an der vorderen Trommelscheibe 17a gesichert ist. Die beiden Halbscheiben 37a, 37b sind also zu der vollflächigen inneren Isolierscheibe 33 zusammengefügt. Beim Zusammenfügen überlappen sich die beiden einander zugewandten Fügeränder 41 der Halbscheiben 37a, 37b, beispielsweise nach Art des Nut-und-Feder-Prinzips oder sind alternativ auf Stoß zueinander in Anlage. Die überstehenden Abschnitte der Flanschbereiche 40 der Halbscheiben 37a, 37b überlappen sich ebenfalls mit den zugeordneten Flanschbereichen 40 an der jeweils anderen Halbschale 37a, 37b. Es ist darauf zu achten, dass die Befestigungs- und Montagelöcher an äußerer Isolierscheibe 34, vorderer Trommelscheibe 17a und innerer Isolierscheibe miteinander fluchten. Schließlich wird die Steckdosenplatte 26 an die äußere Isolierscheibe 34 angesetzt, Befestigungsschrauben durch die zueinander fluchtenden Befestigungs- und Montagelöcher gesteckt und mit der Stirnseite des Trommelkerns 16 verschraubt, wodurch die Steckdosenplatte 26 mitsamt der vorderen Trommelscheibe 17a am Trommelkern 16 befestigt ist. Gleichzeitig sind auch die beiden Halbschalen 37a, 37b an den sich überlappenden Flanschbereichen 40 durch die Befestigungsschrauben aneinander befestigt.

Zur Montage der Isolierscheiben 33, 34 an der hinteren Trommelscheibe 17b wird in ähnlicher Weise vorgegangen. Im Gegensatz zur vorderen Trommelscheibe 17a wird jedoch hier keine Steckdosenplatte 26 montiert, sondern die Befestigungsschrauben werden durch zueinander fluchtende Montage- und Befestigungslöcher (nicht dargestellt) in die Stirnseite des Trommelkerns 16 geschraubt, wodurch die hintere Trommelscheibe 17b am Trommelkern befestigt ist.

## Patentansprüche

1. Leitungsroller, insbesondere Kabeltrommel, mit wenigstens einem Trommelkörper (14) zum Aufwickeln einer elektrischen Leitung, der wenigstens eine aus elektrisch leitfähigem Material ausgebildete Trommelscheibe (17a, 17b) mit einer Innenseite (18) und einer Außenseite (30) aufweist, wobei die Trommelscheibe (17a, 17b) eine Isolierung aus elektrisch nicht leitfähigem Material aufweist, wobei die Isolierung eine der Innenseite (18) vorgelagerte innere Isolierscheibe (33) umfasst, **dadurch gekennzeichnet, dass** die Isolierung eine der Außenseite (30) vorgelagerte äußere Isolierscheibe (34) umfasst, wobei innere und äußere Isolierscheibe (33, 34) mittels Befestigungsmitteln aus elektrisch nicht leitfähigem Material aneinander befestigt sind, in der Art dass auch ein äußerer Rand (42) der Trommelscheibe (17a, 17b) isoliert ist.

2. Leitungsroller nach Anspruch 1, **dadurch gekennzeichnet, dass** die äußere Isolierscheibe (34) transparente Scheibenabschnitte aufweist oder über ihre gesamten Scheibenfläche transparent ist.

3. Leitungsroller nach Anspruch 1 oder 2, **dadurch gekennzeichnet, dass** die der wenigstens eine Trommelscheibe (17a, 17b) zugeordneten Isolierscheiben (33, 34) jeweils einen Isolierscheibendurchmesser aufweisen, der jeweils größer ist als ein Trommelscheibendurchmesser der Trommelscheibe (17a, 17b).

4. Leitungsroller nach einem der vorhergehenden Ansprüche, **dadurch gekennzeichnet, dass** die Befestigungsmittel Bestandteile der Isolierscheiben (33, 34) sind.

5. Leitungsroller nach einem der vorhergehenden Ansprüche, **dadurch gekennzeichnet, dass** die Befestigungsmittel zur werkzeuglosen Befestigung der Isolierscheiben (33, 34) aneinander eingerichtet sind.

6. Leitungsroller nach einem der vorhergehenden Ansprüche, **dadurch gekennzeichnet, dass** die Befestigungsmittel radial außerhalb der Trommelscheibe (17a, 17b) angeordnet sind und die Befestigung der Isolierscheiben (33, 34) aneinander ohne formschlüssigen Halt der Isolierscheiben (33, 34) an der Trommelscheibe (17a, 17b) ausgebildet ist.

7. Leitungsroller nach einem der vorhergehenden Ansprüche, **dadurch gekennzeichnet, dass** die Befestigungsmittel wenigstens ein an der inneren Isolierscheibe (33) angeordnetes inneres Befestigungselement und wenigsten ein an der äußeren Isolierscheibe (34) angeordnetes äußeres Befestigungselement aufweist, die aneinander befestigt sind.

8. Leitungsroller nach Anspruch 7, **dadurch gekennzeichnet, dass** inneres und äußeres Befestigungselement jeweils einstückig an der zugeordneten Isolierscheibe (33, 34) angeordnet, insbesondere an der zugeordneten Isolierscheibe (33, 34) angeformt sind.

9. Leitungsroller nach Anspruch 7 oder 8, **dadurch gekennzeichnet, dass** der Isolierscheibendurchmesser der inneren Isolierscheibe (33) größer ist als der Isolierscheibendurchmesser der äußeren Isolierscheibe (34) und dass das innere Befestigungselement das äußere Befestigungselement umgreift und dort am äußeren Befestigungselement formschlüssig gehalten ist.

10. Leitungsroller nach einem der Ansprüche 7 bis 9, **dadurch gekennzeichnet, dass** das äußere Befestigungselement als insbesondere ununterbrochen umlaufender Befestigungswulst (44) ausgebildet ist, der vorzugsweise einen äußeren Randabschnitt der äußeren Isolierscheibe (34) bildet.

11. Leitungsroller nach Anspruch 10, **dadurch gekennzeichnet, dass** der Befestigungswulst (44) dem äußeren Rand (42) der Trommelscheibe (17a, 17b) radial vorgelagert ist.

12. Leitungsroller nach einem der Ansprüche 7 bis 11, **dadurch gekennzeichnet, dass** das innere Befestigungselement als insbesondere ununterbrochen umlaufender, im Querschnitt U-förmig ausgebildeter Halterandabschnitt (43) ausgebildet ist.

13. Leitungsroller nach einem der vorhergehenden Ansprüche, **dadurch gekennzeichnet, dass** die innere Isolierscheibe (33) mehrere, insbesondere zwei zur inneren Isolierscheibe (33) zusammengefügte Scheibenteile aufweist.

14. Leitungsroller nach Anspruch 13, **dadurch gekennzeichnet, dass** die Scheibenteile von Halbscheiben (37a, 37b), die diesseits und jenseits der zugeordneten Trommelscheibe (17a, 17b) angesetzt und zur Isolierscheibe (33, 34) zusammengesetzt sind, gebildet sind, wobei der U-förmige Halterandabschnitt (43) den Befestigungswulst (44) an der äußeren Isolierscheibe (34) übergreift.

## Claims

1. Cable reel, in particular cable drum, with at least one drum body (14), for winding up an electrical cable and having at least one drum disc (17a, 17b) made of electrically conductive material, with an inside (18) and an outside (30), wherein the drum disc (17a, 17b) has an insulation of electrically non-conductive material, wherein the insulation includes an inner insulating disc (33) in front of the inside (18), **characterised in that** the insulation includes an outer insulating disc (34) in front of the outside (30), wherein inner and outer insulating discs (33, 34) are mounted by means of mounting means of electrically non-conductive material, in such a way that an outer edge (42) of the drum disc (17a, 17b) is also insulated.

2. Cable reel according to claim 1, **characterised in that** the outer insulating disc (34) has transparent disc sections or is transparent over its entire disc surface.

3. Cable reel according to claim 1 or 2, **characterised in that** each of the insulating discs (33, 34) assigned to at least one drum disc (17a, 17b) has an insulating disc diameter which in each case is greater than a drum disc diameter of the drum disc (17a, 17b).

4. Cable reel according to any of the preceding claims, **characterised in that** the mounting means are integral parts of the insulating discs (33, 34).

5. Cable reel according to any of the preceding claims, **characterised in that** the mounting means are designed for fastening the insulating discs (33, 34) to one another without tools.

6. Cable reel according to any of the preceding claims, **characterised in that** the mounting means are arranged radially outside the drum disc (17a, 17b), and the fastening of the insulating discs (33, 34) to one another is effected without positive locking of the insulating discs (33, 34) to the drum disc (17a, 17b).

7. Cable reel according to any of the preceding claims, **characterised in that** the mounting means have at least one inner mounting element located on the inner insulating disc (33), and at least one outer mounting element located on the outer insulating disc (34), which are fastened together.

8. Cable reel according to claim 7, **characterised in that** inner and outer mounting elements, each integral with the assigned insulating disc (33, 34), are in particular moulded on to the assigned insulating disc (33, 34).

9. Cable reel according to claim 7 or 8, **characterised in that** the insulating disc diameter of the inner insulating disc (33) is greater than the insulating disc diameter of the outer insulating disc (34) and that the inner mounting element encompasses the outer mounting element, and is positively locked to the outer mounting element.

10. Cable reel according to any of claims 7 to 9, **characterised in that** the outer mounting element is in the form of an in particular uninterrupted continuous mounting bead (44), preferably forming an outer edge section of the outer insulating disc (34).

11. Cable reel according to claim 10, **characterised in that** the mounting bead (44) is radially in front of the outer edge (42) of the drum disc (17a, 17b).

12. Cable reel according to any of claims 7 to 11, **characterised in that** the inner mounting element is in the form of an in particular uninterrupted continuous holding edge section (43), U-shaped in cross-section.

13. Cable reel according to any of the preceding claims, **characterised in that** the inner insulating disc (33) has several, in particular two, disc parts joined together to the inner insulating disc (33).

14. Cable reel according to claim 13, **characterised in that** the disc parts are formed by disc halves (37a, 37b), attached either side of the assigned drum disc (17a, 17b) and joined together to the insulating disc (33, 34), wherein the U-shaped holding edge section (43) overlaps the mounting bead (44) on the outer insulating disc (34).

## Revendications

1. Enrouleur de câbles, en particulier touret de câbles, avec au moins un corps de touret (14) pour enrouler un câble électrique, qui présente au moins un disque de touret (17a, 17b) réalisé à partir d'un matériau électriquement conducteur avec un côté intérieur (18) et un côté extérieur (30), dans lequel le disque de touret (17a, 17b) présente une isolation composée d'un matériau non conducteur électriquement, dans lequel l'isolation comprend un disque isolant intérieur (33) monté en amont du côté intérieur (18), **caractérisé en ce que** l'isolation comprend un disque isolant extérieur (34) monté en amont du côté extérieur (30), dans lequel les disques isolants intérieur et extérieur (33, 34) sont fixés l'un à l'autre au moyen de moyens de fixation composés d'un matériau non conducteur électriquement de telle manière qu'un bord extérieur (42) également du disque de touret (17a, 17b) est isolé.

2. Enrouleur de câbles selon la revendication 1, **caractérisé en ce que** le disque isolant extérieur (34) présente des sections de disque transparentes ou est transparent sur sa surface de disque totale.

3. Enrouleur de câbles selon la revendication 1 ou 2, **caractérisé en ce que** les disques isolants (33, 34) associés à l'au moins un disque de touret (17a, 17b) présentent respectivement un diamètre de disque isolant, qui est respectivement plus grand qu'un diamètre de disque de touret du disque de touret (17a, 17b).

4. Enrouleur de câbles selon l'une quelconque des revendications précédentes, **caractérisé en ce que** les moyens de fixation font partie intégrante des disques isolants (33, 34).

5. Enrouleur de câbles selon l'une quelconque des revendications précédentes, **caractérisé en ce que** les moyens de fixation sont mis au point pour la fixation sans outil des disques isolants (33, 34).

6. Enrouleur de câbles selon l'une quelconque des revendications précédentes, **caractérisé en ce que** les moyens de fixation sont disposés de manière radiale à l'extérieur du disque de touret (17a, 17b), et la fixation des disques isolants (33, 34) l'un au niveau de l'autre est réalisée sans maintien par complémentarité de forme des disques isolants (33, 34) au niveau du disque de touret (17a, 17b).

7. Enrouleur de câbles selon l'une quelconque des revendications précédentes, **caractérisé en ce que** les moyens de fixation présentent au moins un élément de fixation intérieur disposé au niveau du disque isolant intérieur (33) et au moins un élément de fixation extérieur disposé au niveau du disque isolant extérieur (34), lesquels sont fixés l'un à l'autre.

8. Enrouleur de câbles selon la revendication 7, **caractérisé en ce que** les éléments de fixation intérieur et extérieur sont disposés respectivement d'un seul tenant au niveau du disque isolant (33, 34) associé, en particulier sont formés au niveau du disque isolant (33, 34) associé.

9. Enrouleur de câbles selon la revendication 7 ou 8, **caractérisé en ce que** le diamètre de disque isolant du disque isolant intérieur (33) est plus grand que le diamètre de disque isolant du disque isolant extérieur (34), et que l'élément de fixation intérieur entoure l'élément de fixation extérieur et est maintenu par complémentarité de forme à cet endroit au niveau de l'élément de fixation extérieur.

10. Enrouleur de câbles selon l'une quelconque des revendications 7 à 9, **caractérisé en ce que** l'élément de fixation extérieur est réalisé en tant que bourrelet de fixation (44) en particulier périphérique de manière ininterrompue, qui forme de préférence une section de bord extérieure du disque isolant extérieur (34).

11. Enrouleur de câbles selon la revendication 10, **caractérisé en ce que** le bourrelet de fixation (44) est monté de manière radiale en amont du bord extérieur (42) du disque de touret (17a, 17b).

12. Enrouleur de câbles selon l'une quelconque des revendications 7 à 11, **caractérisé en ce que** l'élément de fixation intérieur est réalisé en tant que section de bord de maintien (43) en particulier périphérique de manière ininterrompue, réalisée de manière à présenter une forme en U dans la section transversale.

13. Enrouleur de câbles selon l'une quelconque des revendications précédentes, **caractérisé en ce que** le disque isolant intérieur (33) présente plusieurs, en particulier deux, parties de disque assemblées au disque isolant intérieur (33).

14. Enrouleur de câbles selon la revendication 13, **caractérisé en ce que** les parties de disque sont formées par des moitiés de disque (37a, 37b), qui sont placées de part et d'autre du disque de touret (17a, 17b) associé et qui sont rassemblées en le disque isolant (33, 34), dans lequel la section de bord de maintien (43) en forme de U surmonte le bourrelet de fixation (44) au niveau du disque isolant extérieur (34).
